# EUROPEAN PATENT APPLICATION

(11) **EP 2 043 319 A1**
(43) Date of publication of application: **01.04.2009**
(21) Application number: 07019203.4
(22) Date of filing: 28.09.2007
(51) Int. Cl.: H04L 29/06, H04W 88/02

(54) **Changing the configuration of a user equipment for a telecommunication network**

(71) Applicant: Nokia Siemens Networks Oy, 02610 Espoo (FI)
(72) Inventor: Abendroth, Jörg, 81737 München (DE); Marhöfer, Michael, Dr., 82041 Deisenhofen (DE)
(74) Representative: Bruglachner, Thomas E.

(57) **Abstract**

It is described a method for changing the configuration of a User Equipment (MS) for a telecommunication network. The described method comprises operating the User Equipment (MS) in a first configuration, testing the User Equipment (MS) whether it represents a trusted entity within the telecommunication network, receiving a trigger signal by the User Equipment (MS), in response to the reception of the trigger signal and in case the User Equipment (MS) represents a trusted entity, providing the User Equipment (MS) with the authorization to autonomously change its configuration to a second configuration, and operating the User Equipment (MS) in the second configuration. The trigger signal may be related to a change of the location of the User Equipment (MS). It is further described a User Equipment for a telecommunication network and a telecommunication network, which are both adapted to carry out the above described configuration changing method.

## Description

### Field of invention

The present invention relates to the field of trusted computing technology for mobile devices within a telecommunication network. In particular, the present invention relates to a method for changing the configuration of a User Equipment for a telecommunication network, wherein the User Equipment has been tested as to represent a trusted entity within the telecommunication network.

### Art Background

Modern User Equipments such as Mobile Terminals (MT) have various functionalities. Such functionalities are for instance an audio recording functionality or a picture acquisition functionality provided by a digital camera being integrated within the User Equipment.

Such functionalities might be prohibited within certain geographical regions or perimeters. In order to guarantee that a user of a corresponding User Equipment is not able to illegally use such a prohibited functionality, this User Equipment has to be confiscated by authorized supervisor or watchmen.

There may be a need for providing an effective enforcement for adapting a User Equipments configuration.

### Summary of the Invention

This need may be met by the subject matter according to the independent claims. Advantageous embodiments of the present invention are described by the dependent claims.

According to a first aspect of the invention there is provided a method for changing the configuration of a User Equipment for a telecommunication network. The provided method comprises (a) operating the User Equipment in a first configuration, (b) testing the User Equipment whether it represents a trusted entity within the telecommunication network, (c) receiving a trigger signal by the User Equipment, (d) in response to the reception of the trigger signal and in case the User Equipment represents a trusted entity, providing the User Equipment with the authorization to autonomously change its configuration to a second configuration, and (e) operating the User Equipment in the second configuration.

This first aspect of the invention is based on the idea that provided that the integrity of the User Equipment has been positively tested, a trusted entity of the User Equipment, which entity embodies a triggered functionality, is capable for enforcing authorization policies. Thereby, the enforcement can be accomplished by the User Equipment alone or in co-operation with a network-side counterpart such as a base station of the telecommunication network.

It has to be mentioned that although the User Equipment has the authorization to change its configuration state autonomously, the User Equipment is forced to operate in the second configuration after the trigger signal has been received. However, all actions being related with authorization policies are carried out autonomously by the User Equipment. Of course, if some support is necessary for implementing the authorization policies support of the telecommunication network can be obtained by the User Equipment.

The trust of the User Equipment rests on securing properties of the User Equipment. In the following it will be assumed that the User Equipment represents a trusted computing platform for the purpose of authorization policies. The authorization may be specified by the standards of the Mobile Phone Working Group (MPWG) of the Trusted Computing Group (TCG). These specifications can be found in the publication "TCG Mobile Reference Architecture, Specification version 1.0, Revision 1, 12 June 2007" and in the publication "TCG Mobile Trusted Module Specification, Specification version 1.0, Revision 1, 12 June 2007". Both publications can be found on the website of the Trusted Computing Group under https://www.trustedcomputinggroup.org/specs/mobilephone.

The first configuration may be defined by a first number of available functions, whereas the second configuration may be defined by a second number of available functions. Typically, the first number is different to the second number. However, it is also possible that the first number and the second number are the same. In the latter case, there is at least one function of the second configuration which has not been available in the first configuration or alternatively, there is at least one function of the first configuration which is available in the second configuration.

In this respect the term function may denote any functionality of the User Equipment, which may be realized by means of hardware of the User Equipment, by means of software or by means of a combination of hardware and software. In case the User Equipment is a mobile phone, a function which is realized predominately by means of Hardware is for instance a camera being integrated in the User Equipment. A function which is realized by means of a combination of hardware and software is for instance a sound recorder being capable of generating Audio files for instance in the mp3-format. Functions which are realized predominantly by means of software are for instance any services which are provided to the User Equipment by a service provider.

In this application the term User Equipment is used for any type of communication terminal such as an arbitrary mobile station (MS), a cellular mobile phone, a Personal Digital Assistant (PDA), a Notebook computer and/or any other movable communication device.

It has to be pointed out that the term telecommunication network refers to all kinds of wireless or wired networks. Therefore, the within this application the telecommunication network may be a radio communication network for mobile devices as well as a computer network such as the internet.

Compared to known methods for changing the configuration of the User Equipment the described method provides the advantage that the overall Network load for e.g. location based services is decreased significantly as the enforcement of the authorization policies, which enforcement might require a plurality of appropriate trigger events, is done at the User Equipment representing the end device and not in the backbone of the telecommunication network.

According to an embodiment of the invention the trigger signal is related to a change of a network hosting the User Equipment.

A change of the hosting network occurs for instance if the User Equipment unsubscribes from a cellular radio telecommunication network and subscribes at a wired or wireless Local Area Network (LAN). The same holds of course also for the opposite case when the User Equipment unsubscribes from the LAN and subscribes at the cellular radio telecommunication network.

The described configuration change may be controlled by an intelligent agent respectively an agent software running on a processor of the User Equipment. This means that all responsibility for a correct configuration change rests on the User Equipment. The first and the second configurations, which are adapted to the different hosting networks, may comprise an appropriate Access Control for various services being assigned to the different hosting networks.

According to a further embodiment of the invention the trigger signal is related to a change of the location of the User Equipment. This means that authorization decisions based on the User Equipments location can be enforced by the User Equipment with unprecedented strength relying on specific security assumptions on a trusted User Equipment platform. For mobile devices such as mobile phones the security assumptions are specified for instance by the above mentioned Trusted Computing Group.

When performing the described method one may make use of trusted computing technology such as a mobile trusted module (MTM) and/or a trusted platform module (TPM) in order to avoid frauds.

The described method may be carried out for instance with the third generation (3G) long term evolution networks which thereby will be extended both with a mechanism to securely provision a (device side) Location Trigger Enforce (LTE) and enforce location based policies. Thereby, location based policies can be enforced with a high accuracy and without increasing the network load.

The described invention provides for an effective and easy way to implement a mechanism to enforce flexible policies such as for instance a location-based access to content and/or a location-based separation from a content.

According to a further embodiment of the invention the location of the User Equipment is determined with a Global Positioning System and/or with an Assisted GPS procedure. Thereby, the procedure for determining the User Equipments localization may be carried out in different ways depending on the current location. When the User Equipment is located within a first geographical region, the requirement for the accuracy of the location determination may be not very high. Therefore, it may be sufficient if in the first geographical region the location of the User Equipment is determined solely with the telecommunication network providing for a spatial resolution corresponding to the size of the network cells. By contrast thereto, if the User Equipment is located within a second geographical region the requirement for the accuracy of the location determination may be high. Therefore, the location of the User Equipment may be precisely determined by also employing the known Global Positioning System (GPS) or Assisted GPS (A-GPS).

The second geographical region may be surrounded by the first geographical region. This means that the second geographical region represents an exclusive area, wherein certain functions of the User Equipment and/or the supporting network are specifically activated or deactivated. Thereby, an efficient and reliable LTE may be realized, wherein the accuracy of the location determination is specifically adapted to the accuracy requirement, which may be different for different geographical areas. Thereby, when employing A-GPS the network load is only increased when it is necessary, i.e. when the User Equipment is located in the second geographical region.

In other words, the described method represents a Trusted Location Trigger Authorization (TLTA). The concept of the TLTA is based on the idea that the location trigger can operate on two separate levels: In a first level the localization of the User Equipment is determined in accordance with handovers carried out when the User Equipment travels from one cell to another cell. In a second level, the localization of the User Equipment is based on GPS and/or A-GPS technology.

In particular the A-GPS information required for exact location is provisioned in a way that is very efficient, as a combination of cell based location detection and GPS based location detection is used. Since A-GPS procedure is only carried out when the User Equipment is in the second geographical region, the overall network load can be kept within acceptable limits.

Although A-GPS is well known by experts in the technical field of the present invention, at this point it is mentioned that A-GPS relies on the fact that an Assistance Server can narrow the mobile phone's geographic location down to within one or two mobile phone cell sites by using information from the cellular network. The Assistance Server receives a reliable satellite signal and comprises a high computational power. This enables the Assistance Server to compare fragmentary signals relayed to it by cell phones, with the satellite signal it receives directly, and then inform the cell phone or emergency services of the cell phone's position.

It has to be mentioned that also other procedures for detecting the location of the User Equipment can be used alone or in combination with the known cell based location detection. Such procedures might include for instance triangulation, wherein the location of the User Equipment is determined by the intersection of two directions originating from spatially different reference locations. Further, the location of the User Equipment might also be determined if a plurality of transmitting stations are provided which respectively transmit a small radio signal being distinguishable from the radio signal originating from the surrounding transmitting stations. By identifying a received radio signal the User Equipment can conclude that it is located in close proximity of the corresponding transmitting station.

According to a further embodiment of the invention the trigger signal is generated by the telecommunication network in the course of a handover of the User Equipment between different cells of the telecommunication network. This may provide the advantage that the described method for changing the configuration of a User Equipment can be integrated in a normal handover of the User Equipment between different cells, which are located in close proximity to the border between different geographical regions. Thereby, different configurations are assigned to the different geographical regions, respectively.

It has to be mentioned that the described method can be carried out in connection with various handover protocols, which have been specified so far. Preferably, the described method may be accomplished in connection with the handover protocols of the 3G Partnership Project Long Term Evolution specifications. This may provide the advantage that the described method for changing the configuration of a User Equipment can be carried out with future mobile telecommunication networks.

According to a further embodiment of the invention the method further comprises (a) receiving a further trigger signal by the User Equipment, (b) in response to the reception of the further trigger signal, providing the User Equipment with the authorization to autonomously change its configuration from the second configuration to the first configuration, and (c) operating the User Equipment in the second configuration. This means that the User Equipment can be switched back into its original configuration as soon as the telecommunication system issues the further trigger signal.

The further trigger signal may be related to a change of the User Equipments position out from a second geographical region back into the first geographical region. Thereby, in the second geographical region it is enforced that the User Equipment comprises the second configuration, whereas in the first geographical region it is enforced that the User Equipment no longer comprises the first configuration.

According to a further embodiment of the invention the method further comprises (a) defining an inbound perimeter surrounding a second geographical region, wherein the second configuration is assigned to the second geographical region, and (b) defining an outbound perimeter surrounding the inbound perimeter. Thereby, when the User Equipment crosses the inbound perimeter when traveling from a first geographical region to the second geographical region, the telecommunication network issues the trigger signal. Correspondingly, when the User Equipment crosses the outbound perimeter when traveling from the second geographical region to the first geographical region, the telecommunication network issues the further trigger signal.

The described separation of the inbound and the outbound perimeter being assigned to a change from the first to the second configuration and from the second to the first configuration, respectively, a judder of the actual configuration can be effectively avoided if the User Equipment moves within a narrow boundary region between the first and the second region or if the User Equipment is located very close to the boundary between the first and the second region.

In other words, by providing spatially different inbound and outbound perimeters a "spatial hysteresis" is created, which avoids changing the configuration of the User Equipment very frequently to and fro the first and the second configuration when, in the course of a small movement within the border region, the User equipment accidentally and frequently crosses the border between the two spatial regions.

According to a further aspect of the invention there is provided a User Equipment for a telecommunication network. The User Equipment comprises (a) a security module which is adapted for storing authentication data, which can be requested from the telecommunication network in order to test whether the User Equipment represents a trusted entity within the telecommunication network, and (b) a unit for receiving a trigger signal from the telecommunication network. Thereby, the User Equipment is adapted for changing its configuration autonomously from a first configuration to a second configuration in response to the reception of the trigger signal.

The described User Equipment is based on the idea that by receiving an appropriate trigger signal the confirmation of the User Equipment can be changed. Thereby, the User Equipment embodies a triggered functionality and is capable for enforcing authorization policies. Thereby, the enforcement can be accomplished by the User Equipment alone or in co-operation with a network-side counterpart such as a base station of the telecommunication network.

The described User Equipment is further adapted to carry out, if necessary with appropriate support of the telecommunication network or with appropriate support of components of the telecommunication network, any one of the embodiments of the method described above.

As has already been mentioned above, the User Equipment may be any type of communication terminal such as an arbitrary mobile station (MS), a cellular mobile phone, a Personal Digital Assistant (PDA), a Notebook computer and/or any other movable communication device.

According to a further aspect of the invention there is provided a telecommunication network comprising at least one User Equipment as described above.

The described telecommunication network is based on the idea that the overall network load can be reduced significantly by providing at least one of the User Equipments with the capability for carrying out the above described method for changing its own configuration state.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows an illustration of the interaction of an existing Mobile Network Operator (MNO) network and Trusted Location Trigger Authorization (TLTA) components.
Figure 2a shows an illustration of a Mobile Station (MS) traveling though the zones and perimeters of a telecommunication system being equipped with TLTA functionality.
Figure 2b shows the states of the telecommunication network and the MS during the travel of the MS depicted in Figure 2a.
Figure 3 shows an illustration of a handover and an attestation procedure at the surveillance perimeter depicted in Figure 2a.
Figure 4 shows the process of disabling the Location Trigger Enforce (LTE) and its interaction with the Trusted Location Trigger Authorization Center (TLTAC).
Figure 5 shows the basic components of a known long term evolution telecommunication network.

### Detailed Description

The illustration in the drawing is schematically. It is noted that in different figures, similar or identical elements are provided with the same reference signs.

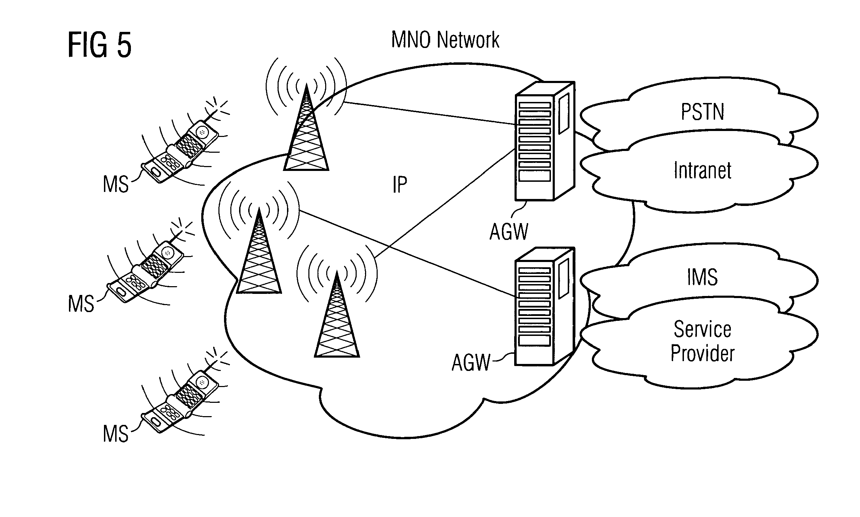

The technical framework for the Trusted Location Trigger Authorization (TLTA) is the Long Term Evolution of 3G Networks specified by the 3GPP standardization. Within it, various improvements over common 2G and 3G network architectures are specified. One of the aims is to simplify the overall architecture. This flat, all-IP based infrastructure is referred to as System Architecture Evolution (SAE). Meeting technical and performance requirements arising from an analysis of the current state of mobile technology requires a reduction of the number of network nodes involved in data processing and transport. A more flat network architecture leads to improved data latency (the transmission delay between the transmitter sending data and the time of reception) and better support of delay-sensitive, interactive and real-time communications. This model is shown in Figure 5 and consists of two types of network elements. Access of user devices, called Mobile Stations (MS) is facilitated by enhanced base stations, referred to as enhanced NodeBs (eNodeB). They provide the air interface and perform the resource management on the air link. The second class of elements are the Access Gate Ways (AGW), which implement certain management functionalities and act as data gateways for user packages. The AGW establishes connections to Service Providers. Within this core network model the Mobile Network Operator (MNO) can offer different services, for instance Assisted Global Positioning System (A-GPS).

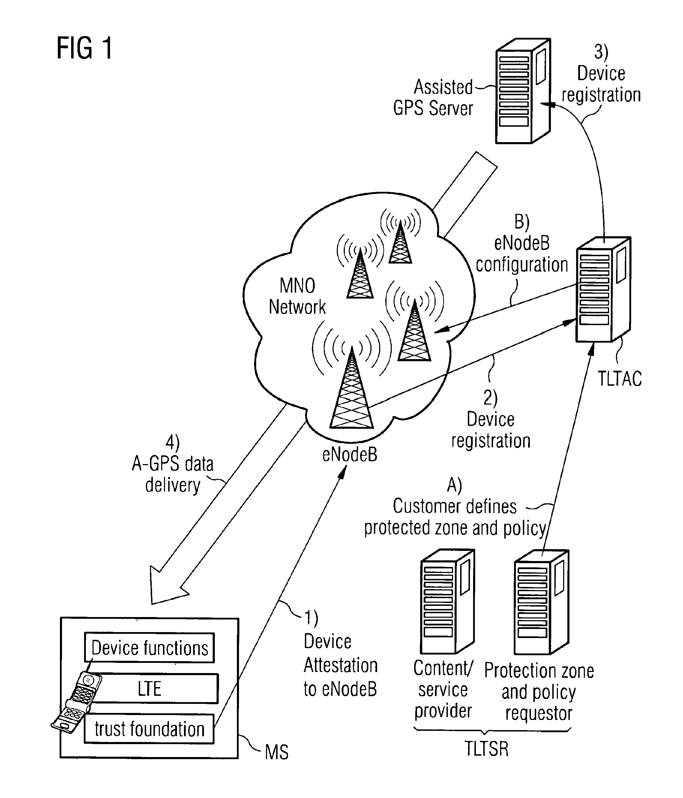

Figure 1 depicts the interaction between the basic SAE architecture (shown as an MNO cloud) and the components added by the TLTA concept. TLTA introduces on network operator side the Trusted Location Trigger Authorization Centre (TLTAC), which establishes a pre-defined geographic area within the area covered by the MNO network. The TLTAC receives (i) the physical configuration of the zone to be protected and (ii) the corresponding policies to be enforced within this zone. This step is labeled as A in Figure 1. Based on these data the TLTAC determines the surveillance perimeter and configures the eNodeBs of the MNO accordingly in step B. After the setup of the protected zone the main task of the TLTAC is to authenticate the end users devices and to maintain a list of them.

In the end users mobile device a Location Trigger Enforcer (LTE) is integrated, which is the device-side counterpart of the TLTAC. It (i) receives and holds the Access Control (AC) policies from TLTAC, (ii) receives and holds the protection zone polygon geometry, (iii) determines entry and exit events to the protection zone by A-GPS, and (iv) enforces the AC policy on the device.

After the initial setup of the protected zone all MS entering this zone are able to acquire certain services. The access to these services is controlled by the LTE at side of the MS. The basic scheme is that the MS, which enters the protected zone performs an attestation of its internal state and configuration to the MNO (step 1 in Figure 1). If this attestation succeeds the device is registered at the TLTAC (step 2) and also registered at the side of the A-GPS service, which provides for the accurate localization of the MS (step 3). These registration steps are mainly required to protect the A-GPS service against fraud and to enable certain payment methods and schemes.

The TLTAC and LTE together form a Policy Decision Point (PDP) respectively a Policy Enforcement Point (PEP) related model based on a local enforcement of the policies defined. From the perspective of the content provider the trustworthiness of the local LTE is testified and sufficiently strong. Therefore it is required that the MS of the end user constitutes a trusted platform, which is defined by the following capabilities:
1) Secure boot:
   The boot process is defined from the time that power is applied until the user is able to interact with the device and to perform his intended functions. Within this time span the secure boot process takes place ensuring that fundamental capabilities are in place ensuring the reliability of the system. These capabilities include means for resource management. During boot each component is measured in order of execution. These measurement values are then verified by a verification agent using so called Reference Integrity Metric respectively Reference Integrity Measurement (RIM) certificates. If the values match then the processing will continue and the start of the component is registered in a log as well as in the corresponding system state register. Otherwise the boot will fail and the system switches into a failed state. In case of a failed state the system may offer the concept of a Pristine Boot which offers a fallback property. This Pristine Boot also defines the device state after the initial factory installation where the lifecycle of a device starts. Another use case for the pristine boot is defined by update process to rebuild the required credentials, which are used during the boot process. If this secure boot of a device succeeds the system on top can rely on the integrity of the system beneath. This includes all subsystems integrated in the platform including the LTE.
2) Remote attestation:
   A system which performed a secure boot process on top of an appropriate platform constitutes a trustworthy base for other operations. Hereby it is essential to communicate this state in a reliable way towards other entities to testify this attribute. This process is called attestation in the context of Trusted Computing (TC).
   Therefore, TC may employ two concepts in order to implement this functionality: Platform Configuration Registers (PCR) and Attestation Identities (AI). A PCR reflects the system configuration reported by the system and is protected within the TPM respectively the MTM against fraud. These PCR values are created by cryptographically combining hash values representing the measured component. Each value added to the PCR value is also recorded in a log file. The log file and the corresponding PCR value together are testifying the system status. To simplify the verification process the Mobile Phone Working Group (MPWG) of the Trusted Computing Group (TCG) defined a verifier at the side of the end device respectively the MS. This verifier works as an agent close with the measurement system and holds reference values for the individual measurements.

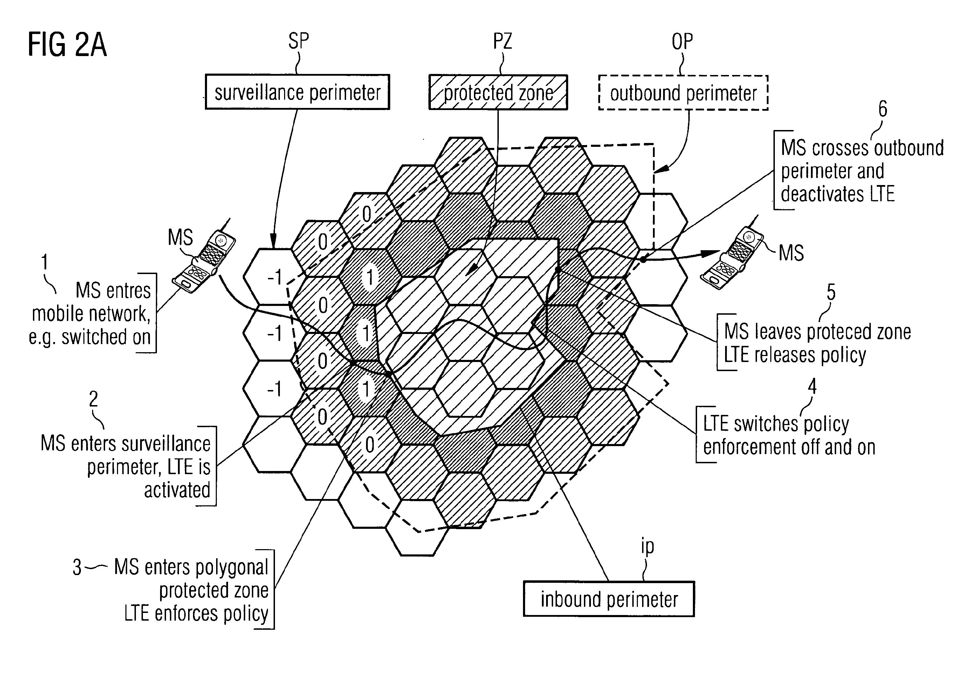

In the following the mobility process of a MS is explained with reference to Figure 2a.

The area in which the authorization policy is to be enforced is called the protected zone (pz). It is here for simplicity defined as the area circumscribed by a closed polygon in the plane, which in turn is covered by the cells of the mobile network. Now, the number "1" is assigned to all cells on the boundary of the closed, connected set of cells covering the pz. This set of cells is denoted c1. The surveillance perimeter (sp) is defined as outer boundary of c1. Call c0 the set of cells adjacent to sp, c-1 the set of cells adjacent to the outer boundary of c0, and so on. Finally let the outbound perimeter (op) be a closed polygon such that c1 ⊂ *o̅p̅* and dist(op;c1) > 0. This geometric arrangement is shown in Figure 2a, wherein, op results from simply scaling pz.

Figure 2a also exhibits the travel of a mobile device MS through these zones. Here we describe this journey on a functional level. Further details regarding the corresponding communication protocols and procedures will be explained in detail later in this application.

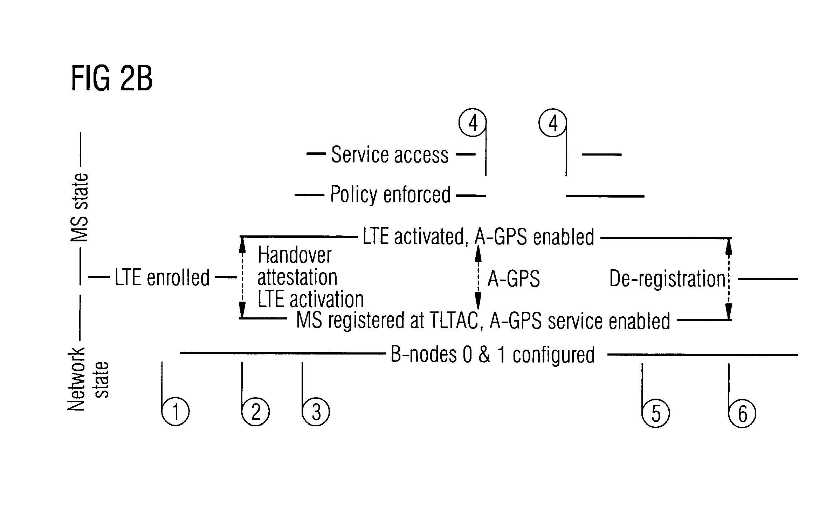

The corresponding states of the MS and the mobile communication network relevant to TLTA are shown in Figure 2b. At the point marked (1), the MS enters the mobile network in a normal operational mode, with deactivated LTE and A-GPS functions. Upon crossing sp at (2), the normal handover between a cell of c0 and the corresponding cell of c1 is augmented by the activation of the LTE and the A-GPS, a remote attestation process, a registration of MS with the TLTAC, a download of the authorization policy and a transfer of information regarding the geometry of the pz to the MS. From there on the MS autonomously operates the location trigger to detect the pz using A-GPS and with the aid of an A-GPS support server (possibly a function of TLTAC). When the MS enters the pz at (3), the LTE enforces the policy, for instance unlocks a preassigned credential for service access. During the presence in the pz, the MS follows the policy and can for instance use a Location Based Service (LBS) whenever the user of the MS desires. At some points (4), the MS may leave and re-enter the pz and the LTE switches the enforcement of the policy off and on. The LTE finally releases policy enforcement at point (5), but is deactivated only at crossing of the op. At point (6), the LTE also actively de-registers the MS with the TLTAC. The triggering of location is cell-based only between points (1) and (2) and after point (6), otherwise it relies on (assisted) GPS and the autonomous decision of the MS via the LTE.

In the following appropriate protocols and procedures for performing the location based authorization will be described in more detail.

The trusted activation of the LTE, i.e., the activation of the LTE on the MS and a trustworthy report of that fact toward the network, when the MS crosses the sp, represents the heart of the TLTA concept. In order to combine the TLTA concept with present mobile technology it is important to integrate this process into the normal handover of a MS between a cell of c0 and a cell of c1.

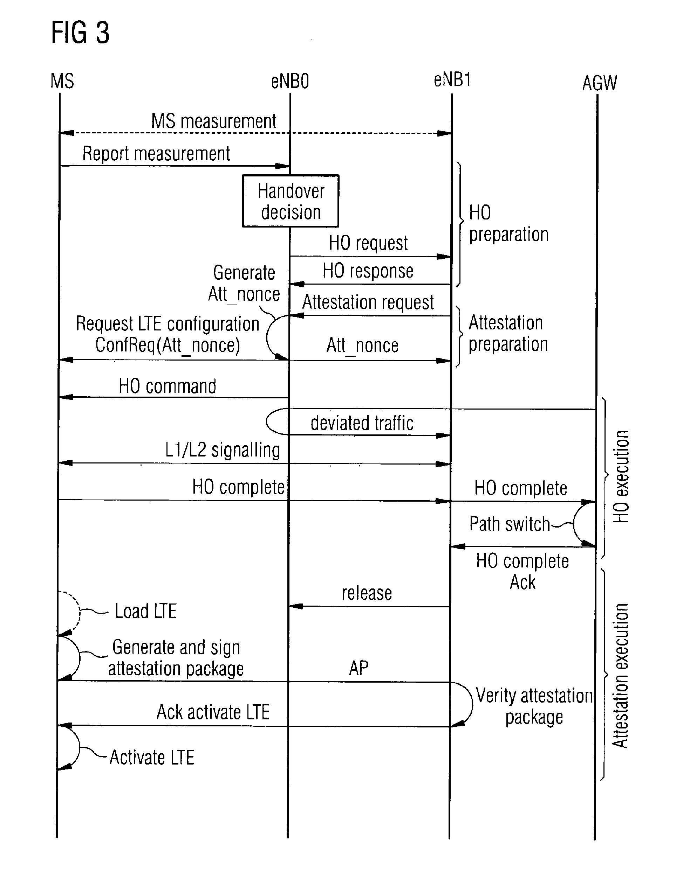

Various handover protocols have been specified by the industry being involved with high tech telecommunication networks. Just as an example in this application a modification of the 3GPP Long Term Evolution (3GPPLTE) specifications will be discussed, which offer advanced flexibility and promise superior performance. The 3GPPLTE handover (HO) is divided in two basic stages, HO preparation and HO execution. In the present case it involves an eNodeB of the cell c0 (eNB0) and an eNodeB of the cell c1 (eNB1). This is shown in Figure 3. This process is augmented by two stages of remote attestation of the MS, regarding the presence and activity of the LTE, in the scheme described here. This design maximally separates the tasks between the eNodeB of c0 and the eNodeB of c1. The first one, attestation preparation, sets up the eNB1 and the MS to perform LTE activation and remote attestation. The second one, attestation execution, is performed after the HO and does not interfere with this time critical process.

When the eNB1 is notified of an HO request of some MS, it issues an HO response to the eNB0, and additionally notifies the eNB0 of the necessity of a remote attestation of the MS. The sole task of eNB0 is then to generate and distribute a particular nonce, as specified by the remote attestation protocol of the TCG (see Trusted Computing Group, TPM Main Part 2 TPM Structures, Specification Version 1.2 Revision 94, March 2006, TPM Main Part 3 Commands, Specification Version 1.2 Revision 94, March 2006), for this purpose to the MS and to the eNB1. This is a modification of the original TCG attestation protocol, which combines eNB0 and eNB1 into one verifying party. The eNB0 issues the TCG conformant attestation request to the MS, along with a signal Att_nonce.

In this respect it is mention that a "nonce" is a random number, that is used in order to proof respectively to guarantee the up-to-dateness of a request.

The activation of LTE and attestation thereof is concluded only after the HO. This means that the MS loads the LTE (if it is not already present in its memory), generates an attestation package according to the specification as described by the TCG, and sends it to the eNB1 only after the initial signaling with this eNodeB is complete and acknowledged by the MS.

By attestation, the eNB1 can be convinced that the MS is in a trustworthy state and actually has an untampered LTE. It then sends an acknowledgement to the MS, including the signal to activate the LTE for operation within the area defined by the sp.

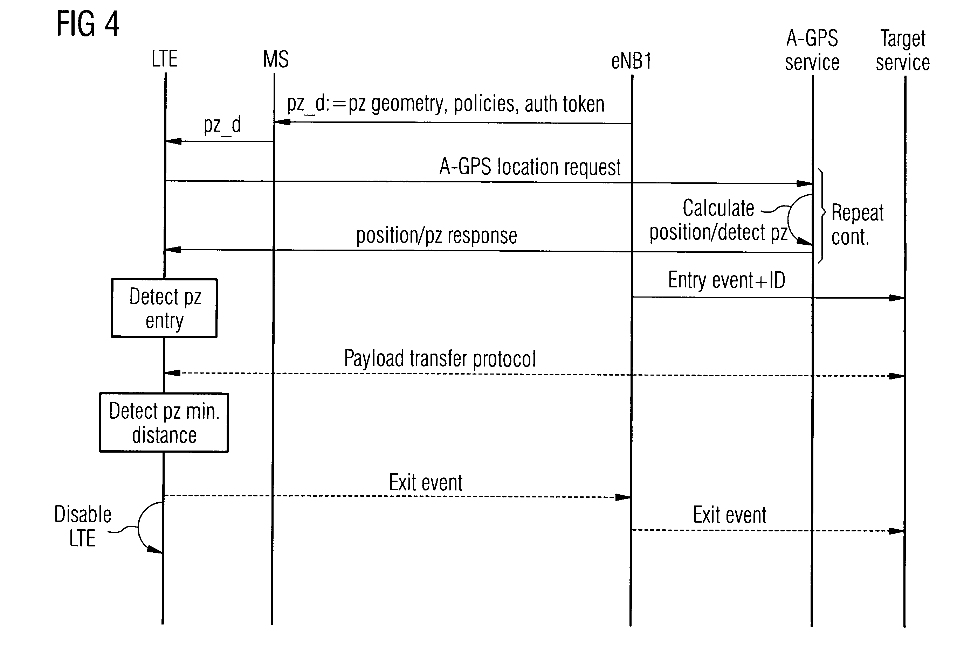

In the following the establishment of the protected zone (pz) will be described in detail with reference to Figure 4. In Figure 4 the registration of the MS the TLTAC and the download of the policy to the LTE on the MT are not shown in Figure 5 and can be initiated by the AGW, the eNB1 or the MS itself. After registration with the TLTAC, the pair consisting of the MT and the TLTAC can operate as a combination of policy enforcement point respectively policy decision point of an authorization system in any desired separation of duties.

Policy enforcement can be divided into two levels for the area between sp and pz and the interior of pz with two separate policies called Psp and Ppz, respectively. Authorization decisions can be felled either by the LTE of the MS alone or by LTE in collaboration with the Localization Trigger Access Communication Center (LTACC) in both cases. For the latter case, the LTE would transmit with an authorization request a binary attribute to the LTACC, stating whether the MS is in pz or not.

In the following paragraphs (A) the security of the TLTA concept and (B) questions of performance and practical issues of the TLTA concept are discussed.

### (A) Security of the TLTA concept:

The two-tiered architecture of the TLTA concept naturally divides security in two levels. Security on the sp rests on the untamperedness of the involved eNodeB eNB0 and the eNodeB enB1, which is a precondition. Security in pz on the other hand depends on the separation of tasks between the TLTAC and the LTE. The security of the LTE is enabled by the unique features of trust-enhanced MS, namely secure boot and attestation, features which are fundamental for TLTA. When a registered device enters or leaves pz from or to sp, policy enforcement by the LTE switches between the two policies Psp and Ppz defined above. In the following the security properties of the enforcement of Ppz will be discussed.

The design entails that a security assessment of TLTA must distinguish between policies for functional enforcement and access control, respectively. The former means that certain functions on all devices respectively all MSs in the pz shall be enabled or disabled. The latter allows certain content or services to be delivered or made available to the MSs registered with the TLTAC. The essential difference between the two is that, in order to extend functional enforcement to all MSs in pz, the LTE activation must be ensured on all of them or the policy must be enforced otherwise, e.g. by out-of-band measures and processes. Access control is less security-critical. In contrast to functional enforcement, an access control policy is effectively enforced by the TLTAC, which will yield access only to MSs with active LTE accepting the Ppz. In this case, the LTE provides the added security that proliferation of access to content or services beyond the pz is effectively prevented.

In the following some design choices for realizing the TLTA concept are briefly discussed.

The de-centralized architecture and operation of TLTA is designed with the central aim of generally reducing the network load. This is only possible with the desired level of security and enforcement if trust-enhanced MSs are used as central functional building blocks. The TLTA is loosely coupled to the top-level of the cellular infrastructure. The TLTAC operates on the level of the network's Home Location Register (HLR) respectively the network's Visitor Location Register (VLR) and Mobile Switching Center (MSC) and could be colocated or integrated with either one.

Signaling cost is a major concern for location management in cellular overlay networks, which poses similar demands as location based authorization. In the present case, the two-tiered method of TLTA yields the largest advantage in this respect by leveraging the capacities of the edge of the network. In particular communication with the MSs at the sp is completely borne by the eNodeBs and is thus maximally de-centralized. Moreover, the MSs operate largely autonomous inside the pz.

Furthermore, the protocol is designed such that the eNB0 of c0 is passive. The sole essential task of eNB0 is the generation of the signal Att_nonce. This saves communication effort at the stage of node configuration, since only the eNodeBs of c1 need to be activated to handle entry events.

Another feature is the separation of inbound (sp) and outbound perimeter. It avoids judder, i.e., frequent switching on and off of the LTE and according registration and deregistration with the TLTAC.

A bottleneck could ensue if the physical access to the pz is restricted, in the extreme case to a single cell and a large number of MSs enters the sp. This can happen in particular in application scenarios for functional enforcement (see below). This concentrates the load for the TLTA entry protocol to a single enB0, enB1 pair. The problem can be alleviated by (a) organizational measures to distribute entry points over the perimeter of the pz, or by (b) shifting the sp further away from pz, i.e., to the boundary between cell layers c₋ₙ, C₋ₙ₊₁, ... wherein n ≥ 1. A third option is to introduce extra so called ad hoc cells such as for instance mobile nano/picocells. This is also an interesting option if the network's deployed eNodeBs in the area are not capable to execute the TLTA protocol.

Regarding the mobile users respectively MS owners, the forceful activation of the LTE is a potential infringement of the proprietor's power of disposal. A similar consideration holds for Trusted Computing technology on any platform. It has led the TCG to mandate activation and take ownership procedures for the hardware security anchor TPM/MTM. These concepts can sensibly be lifted to the level of applications intimately connected with and depending on TC. Furthermore, procedures for user notification and acknowledgement can be combined with TLTA.

It is mentioned that the TLTA technology is based on fundamental ideas. Hence it is easy to envisage application scenarios in many sectors ranging from general m-commerce to public safety. In the following paragraphs some concrete application scenarios for the TLTA concept will be briefly discussed.
(1) High-tech trade fair: Functional restriction policies can be enforced with exemptions. Consider for instance a high-tech trade fair. The pz may be determined by the fair's host so as to coincide with the physical entry barriers of the fair area. The sp is a larger area so that visitors with TLTAC-enabled MSs will already be registered with TLTAC when passing the entry control. The Ppz stipulates that cameras and sound recording facilities of devices have to be switched off by the LTE. They then can freely pass through, while unprotected (or non-networked devices, e.g., cameras) are detected at the entry barrier and are confiscated.
(2) Combating industrial espionage is another use case. For instance a company may use the TLTA concept to disable MS cameras within the borders of their campus, while keeping the MSs of visiting executives operative for communication purposes.
(3) Sports stadium and concert hall: The voice commentary on a sports event is broadcast encrypted to mobile devices in a stadium, which represents the pz. Only TLTA-enabled MS have received the decryption keys with the Ppz data managed securely by the LTE. In a concert hall, the live audio broadcast should add to the experience of the audience, and can be personalized in terms of language and otherwise. This shall not be able to be received outside of the concert hall, to avoid bootlegging.
(4) Mission critical communication: MSs in a disaster area can be configured to receive emergency and alarming messages. This can be used to inform the public or emergency action forces but also to locate them within the danger zone. Standard mobile devices can co-operate with the special ones of action forces and inter-work over network boundaries, e.g., with Terrestrial Trunked Radio (TETRA) networks.
(5) Mobile gaming: A game spread out over the area of a larger city requires to adjust the device side policies based on narrow location, e.g., when the user has reached a certain waypoint. Thereby games based on the principles of paper chase or scavenger hunt can be played.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### List of reference signs and abbreviations:

- 3GPPLTE: 3GPP Long Term Evolution
- AC: Access Control
- Ack: Acknowledgement signal
- AGW: Access Gate Way
- A-GPS: Assisted GPS
- AI: Attestation Identities
- AP: attestation package
- ConfReq: Confirmation Request
- ENB0: eNodeB of the cell c0
- eNB1: eNodeB of the cell c1
- eNodeB: enhanced NodeB
- GPS: Global Positioning System
- HLR: Home Location Register
- HO: handover
- IMS: IP Multimedia Subsystem
- ib: Inbound perimeter
- LAN: Local Area Network
- LBS: Location Based Service
- LTACC: Localization Trigger Access Communication Center
- LTE: Location Trigger Enforcer
- MNO: Mobile Network Operator
- MPWG: Mobile Phone Working Group
- MT: Mobile Terminal
- MS: Mobile Station
- MSC: Mobile Switching Center
- MTM: mobile trusted module
- op: outbound perimeter
- PCR: Platform Configuration Registers
- PDA: Personal Digital Assistant
- PDP: Policy Decision Point
- PEP: Policy Enforcement Point
- Psp: separation policy in sp
- PSTN: Public Switched Telephone Network
- Ppz: separation policy in pz
- pz: protected zone
- RIM: Reference Integrity Metric /Reference Integrity Measurement
- sp: surveillance perimeter
- TC: Trusted Computing
- TCG: Trusted Computing Group
- TETRA: Terrestrial Trunked Radio
- TLTA: Trusted Location Trigger Authorization
- TLTAC: Trusted Location Trigger Authorization Center
- TLTSR: Trusted Location Trigger Authorization Service Requester
- TPM: trusted platform module
- VLR: Visitor Location Register

## Claims

1. A method for changing the configuration of a User Equipment (MS) for a telecommunication network, the method comprising
• operating the User Equipment (MS) in a first configuration,
• testing the User Equipment (MS) whether it represents a trusted entity within the telecommunication network,
• receiving a trigger signal by the User Equipment (MS),
• in response to the reception of the trigger signal and in case the User Equipment (MS) represents a trusted entity, providing the User Equipment (MS) with the authorization to autonomously change its configuration to a second configuration, and
• operating the User Equipment (MS) in the second configuration.

2. The method according to claim 1, wherein
the trigger signal is related to a change of a network hosting the User Equipment (MS).

3. The method according to claim 1, wherein
the trigger signal is related to a change of the location of the User Equipment (MS).

4. The method according to claim 3, wherein
the location of the User Equipment (MS) is determined with a Global Positioning System and/or with an Assisted GPS procedure.

5. The method according to any one of the claims 3 to 4,
wherein
the trigger signal is generated by the telecommunication network in the course of a handover (HO) of the User Equipment (MS) between different cells (c0, c1) of the telecommunication network.

6. The method according to any one of the claims 3 to 5, further comprising
• receiving a further trigger signal by the User Equipment (MS),
• in response to the reception of the further trigger signal, providing the User Equipment (MS) with the authorization to autonomously change its configuration from the second configuration to the first configuration, and
• operating the User Equipment (MS) in the second configuration.

7. The method according to claim 6, further comprising
• defining an inbound perimeter (ip) surrounding a second geographical region (pz), wherein the second configuration is assigned to the second geographical region (pz), and
• defining an outbound perimeter (op) surrounding the inbound perimeter (ip), wherein
- when the User Equipment (MS) crosses the inbound perimeter (ip) when traveling from a first geographical region to the second geographical region (pz), the telecommunication network issues the trigger signal, and
- when the User Equipment (MS) crosses the outbound perimeter (op) when traveling from the second geographical region (pz) to the first geographical region, the telecommunication network issues the further trigger signal.

8. A User Equipment for a telecommunication network, the User Equipment (MS) comprising
• a security module which is adapted for storing authentication data, which can be requested from the telecommunication network in order to test whether the User Equipment (MS) represents a trusted entity within the telecommunication network,
• a unit for receiving a trigger signal from the telecommunication network,
wherein the User Equipment (MS) is adapted for changing its configuration autonomously from a first configuration to a second configuration in response to the reception of the trigger signal.

9. A telecommunication network comprising
• at least one User Equipment (MS) as set forth in claim 8.
